# EUROPEAN PATENT SPECIFICATION

(11) **EP 4 128 306 B1**
(45) Date of publication and mention of the grant of the patent: **02.09.2026**
(21) Application number: 20928941.2
(22) Date of filing: 31.03.2020
(51) Int. Cl.: H01H 71/04, G01K 11/12, H01H 9/16, H01H 11/00, H01H 1/00

(54) **APPARATUS AND METHOD OF DETERMINING STATUS OF CIRCUIT BREAKER IN SWITCHGEAR**
VORRICHTUNG UND VERFAHREN ZUR FESTSTELLUNG DES ZUSTANDES EINES LEISTUNGSSCHALTERS IN EINER SCHALTANLAGE
APPAREIL ET PROCÉDÉ DE DÉTERMINATION DE L'ÉTAT D'UN DISJONCTEUR DANS UN APPAREILLAGE DE COMMUTATION

(43) Date of publication of application: 08.02.2023
(73) Proprietor: ABB SCHWEIZ AG, 5400 Baden (CH)
(72) Inventor: ZHUANG, Genhuang, Xiamen, Fujian 361001 (CN); ZHENG, Wei, Xiamen, Fujian 361000 (CN); HUANG, Liqun, Xiamen, Fujian 361006 (CN); SU, Cuicui, Beijing 102200 (CN); WANG, Yang, Beijing 100024 (CN); LUO, Dian, Shanghai 201201 (CN)
(74) Representative: Zimmermann & Partner Patentanwälte mbB
(86) International application number: PCT/CN2020/082544
(87) International publication number: WO 2021/196002

(56) References cited:
- WO-A1-2019/113213
- WO-A1-2019/177258
- CN-A- 104 697 768
- CN-A- 108 469 586
- CN-A- 109 376 732
- DE-C1- 19 708 460
- KR-B1- 101 528 736
- US-A- 5 805 813
- US-A1- 2015 070 507
- US-A1- 2019 333 419

## Description

### FIELD

Embodiments of the present disclosure generally relate to a switchgear, and more specifically, to an apparatus and a method of determining a status of a circuit breaker in a switchgear.

### BACKGROUND

Medium voltage and high voltage switchgear are commonly used electrical equipment in transmission and distribution lines. A circuit breaker is a standard part of the switchgear. The circuit breaker is an automatically operated electrical switch designed to protect an electrical circuit from damage caused by overcurrent, typically resulting from an overload or short circuit. Once a fault of the circuit is detected, contacts of the circuit breaker must open to interrupt the circuit.

In switchgear, heat is usually generated at locations where components such as busbars, cables, and contacts of a circuit breaker are connected, causing high local temperatures at those locations. Such locations are usually called hotspots. Monitoring the temperatures of these locations is essential to ensuring the safety of electrical components. Monitoring temperatures of the hotspots typically involves installation of monitoring apparatus such as sensors, which are vulnerable to being poorly assembled and long overdue maintenance operations.

Furthermore, a shutter is typically provided in the switchgear to cover fixed contacts of a circuit breaker. The shutter needs to be opened to facilitate engagement of the moveable contacts with the fixed contacts of the circuit breaker. The positions of the moveable contacts and/or the shutters are also crucial factors affecting the performance of the circuit breaker.

In conventional solutions, the temperature and the position of the circuit breaker are detected in a mutually independent manner, resulting in a complex component layout and circuit design.

US 2015/070507 A1 describes an image capture module for an intelligent electronic device. DE 197 08 460 C1 describes a device for detecting the switching position of electrical switching devices. WO 2019/177258 A1 discloses circuit a breaker opening/closing assistance apparatus for correcting a thermal image of a circuit breaker on the basis of a visible image of the circuit breaker. KR 101 528736 B1 describes a distribution board capable of deterioration sensing.

### SUMMARY

In accordance with the invention, an apparatus for determining a status of a circuit breaker in a switchgear as set forth in claim 1 is provided.

Further embodiments are inter alia disclosed in the dependent claims.

With the above arrangements, the status of the circuit breaker including the temperature and the movement status can be determined by analyzing the images captured by the image capturing device. In this way, an operator can receive more valuable information without having to keep watching the video of the circuit breaker over time, thereby improving the control efficiency and effectiveness.

In some embodiments, the apparatus further comprises a transmission unit configured to transmit information about the movement status and the temperature of the circuit breaker to an external device. In this way, the external device can receive the information timely and efficiently, improving the safety of the circuit breaker and even the switchgear.

The appearance property comprises at least one of color or transparency. As a result, the temperature indicator can be more flexibly selected to allow lower costs and improved stability.

In some embodiments, the apparatus further comprises a light source configured to provide a predetermined lighting condition, wherein the image capturing device is configured to capture the images under the predetermined lighting condition. The images captured under the predetermined lighting condition can improve accuracy of determination of the status.

In some embodiments, the apparatus further comprises a reference color bar arranged adjacent to the temperature indicator, wherein the processor is further configured to determine the temperature of the circuit breaker by detecting a change of color contrast between the reference color bar and the temperature indicator across the images. In this way, the detection accuracy can be further improved.

In some embodiments, the temperature indicator comprises one or more thermochromic blocks arranged in an array, each thermochromic block comprises at least one thermochromic layer of a liquid crystal material. This arrangement can enlarge the temperature range to be determined, thereby improving the applicability of the apparatus.

In some embodiments, the liquid crystal material comprises a chiral nematic liquid crystal, a cholesteric phase liquid crystal, a smectic liquid crystal, or any combination thereof. As a result, the performance of the temperature indicator can be improved.

In some embodiments, the processor is further configured to determine a color difference of the one or more thermochromic blocks based on the change of the appearance property of the temperature indicator; in accordance with a determination that the color difference exceeds a threshold value, cause information about the temperature of the circuit breaker to be transmitted to the external device. In this way, the temperature of the circuit breaker can be determined in a rapid and efficient way.

In some embodiments, the processor is further configured to detect a change of a position of an edge of a position indicator on a shutter across the images, the shutter configured to cover or expose fixed contacts of the circuit breaker, the position indicator arranged on the shutter; and determine a movement status of the shutter at least based on the detected change of the position of the edge of the position indicator. This arrangement allows the determination of the movement status of the shutter. In this way, the safety of the circuit breaker and even the switchgear can be improved.

In some embodiments, the processor is further configured to detect one or more edges in each of the images; detect the edge of the temperature indicator and/or the position indicator from the one or more edges based on movement paths of the one or more edges across the images. In this way, noise edges can be removed, thereby improving the accuracy of the determination of the movement status.

In some embodiments, the processor is further configured to determine a feature representation for each of the images of the circuit breaker by applying the images to a neural network model, the feature representation at least indicating information about an edge of the circuit breaker and/or a shutter, the shutter configured to cover or expose fixed contacts of the circuit breaker; and determine a movement status of the circuit breaker and/or the shutter based on a similarity between the feature representation and a reference representation, the reference representation being associated with a predetermined movement status of the circuit breaker and/or the shutter. In this way, the movement status can be determined more intelligently.

In some embodiments, the processor is further configured to determine the feature representation by determining a target region of each of the images; and determining the feature representation by applying the target region to the neural network model. As a result, the computing speed for determining the movement status of the circuit breaker and/or the shutter can be significantly improved.

In some embodiments, the processor is further configured to obtain the neural network model, the neural network model being trained based on sample images and sample feature representations, a sample feature representation at least indicating information about an edge in one of the sample images.

In some embodiments, the processor is further configured to in accordance with a determination that the movement status fails to match a predetermined status, cause an alarm about the movement status of the circuit breaker and/or the shutter to be transmitted to an external device.

In accordance with the invention, a method of determining a status of a circuit breaker in a switchgear set forth in claim 9 is provided.

In some embodiments, the method further comprises detecting a change of color contrast between a reference color bar and the temperature indicator across the images; in accordance with a detection that the change of color contrast exceeds a threshold value, causing an alarm about the temperature of the circuit breaker (201) to be transmitted to the external device.

In some embodiments, the method further comprises determining a color difference of one or more thermochromic blocks of the temperature indicator based on the change of the appearance property of the temperature indicator unit; in accordance with a determination that the color difference exceeds a threshold value, causing an alarm about the temperature of the circuit breaker (201) to be transmitted to the external device.

In some embodiments, the method further comprises detecting a change of a position of an edge of a position indicator on a shutter across the images, the shutter configured to cover or expose fixed contacts of the circuit breaker, the position indicator arranged on the shutter; and determining a movement status of the shutter based on the detected change of the position of the edge of the position indicator.

In some embodiments, the method further comprises detecting one or more edges in each of the images; and detecting the edge of the temperature indicator and/or the position indicator from the one or more edges based on movement paths of the one or more edges across the images.

In some embodiments, the method further comprises determining a feature representation for each of the images of the circuit breaker by applying the images to a neural network model, the feature representation at least indicating information about an edge of the circuit breaker and/or a shutter, the shutter configured to cover or expose fixed contacts of the circuit breaker; and determining a movement status of the circuit breaker and/or the shutter based on a similarity between the feature representation and a reference representation, the reference representation being associated with a predetermined movement status of the circuit breaker and/or the shutter.

In some embodiments, the method further comprises determining a target region of each of the images; and determining the feature representation by applying the target region to the neural network mode.

In some embodiments, the method further comprises obtaining the neural network model, the neural network model being trained based on sample images and sample feature representations, a sample feature representation at least indicating information about an edge in one of the sample images.

In some embodiments, the method further comprises in accordance with a determination that the movement status fails to match a predetermined status, causing an alarm about the circuit breaker and/or the shutter to be transmitted to an external device.

It is to be understood that the Summary is not intended to identify key or essential features of embodiments of the present disclosure, nor is it intended to be used to limit the scope of the present disclosure. Other features of the present disclosure will become easily comprehensible through the description below.

### BRIEF DESCRIPTION OF THE DRAWINGS

The above and other objectives, features and advantages of the present disclosure will become more apparent through more detailed depiction of example embodiments of the present disclosure in conjunction with the accompanying drawings, wherein in the example embodiments of the present disclosure, same reference numerals usually represent same components.
FIG. 1 shows a schematic diagram of a switchgear according to embodiments of the present disclosure;
FIG. 2 shows a perspective view of a circuit breaker and a shutter arranged in a switchgear according to embodiments of the present disclosure;
FIG. 3 shows a schematic diagram of a temperature indicator according to embodiments of the present disclosure; and
FIG. 4 shows a flowchart illustrating a method of determining a status of a circuit breaker in a switchgear according to embodiments of the present disclosure.

Throughout the drawings, the same or similar reference symbols are used to indicate the same or similar elements.

### DETAILED DESCRIPTION

The present disclosure will now be discussed with reference to several example embodiments. It is to be understood these embodiments are discussed only for the purpose of enabling those persons of ordinary skill in the art to better understand and thus implement the present disclosure, rather than suggesting any limitations on the scope of the subject matter.

As used herein, the term "comprises" and its variants are to be read as open terms that mean "comprises, but is not limited to." The term "based on" is to be read as "based at least in part on." The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be comprised below. A definition of a term is consistent throughout the description unless the context clearly indicates otherwise.

Continuous online temperature monitoring provides effective means to evaluate the current condition of equipment and to timely detect abnormality. For example, for a switchgear, especially a medium-voltage switchgear, temperature information about the temperature differences among three phases is essential to determine the performance and/or status of the switchgear, which facilitates maintenance and diagnosis procedures.

In conventional solutions, the temperatures of the three phases, especially the temperatures of the moveable contacts, are detected via sensors or IR thermal imaging or sensor systems. Typically, the infrared and sensor measurement systems used for this type of monitoring are cost-prohibitive and, therefore not economically suitable for permanent temperature monitoring. For an infrared measurement system, the periodic nature of measurements and unsatisfactory accuracy are also significant concerns.

Nowadays, thermochromic (TC) materials have been adopted for some temperature monitoring labels. TC materials are materials which change their optical properties upon reaching a characteristic "transition temperature." Such TC materials are widely employed in thermometers, toys, commodities, anti-counterfeit labels, and also smart windows. For electrical areas, TC materials are already commercially used for battery testers to monitor the condition of the charged state of batteries.

By using the TC materials with the transition temperature lying in a temperature range to be tested, the temperature of the circuit breaker can be displayed intuitively and in real-time. However, this approach requires an operator's constant attention to labels. For the switchgear where abnormal conditions can deteriorate rapidly, this approach may delay the operator's handling of the crisis, thereby affecting the safety of the switchgear.

Furthermore, during the process of circuit breaker racking in the switchgear, the circuit breaker or shutter mechanism is at risk of being jammed. However, it is not easy and safe to find the jammed problem of the circuit breaker or the shutter mechanism externally, which will further seriously affect the performance of the circuit breaker and cause hidden safety hazards or accidents. Therefore, there is an urgent need to monitor circuit breakers or shutter mechanisms from the inside to improve safety.

In conventional solutions, a camera provided in the switchgear can provide an operator with an internal image in the form of video. In this case, the best way to spot problems is to keep someone watching the video, which is inefficient. Furthermore, it is hard to recognize abnormal conditions in the switchgear from the video. As a result, mechanical problems that could cause serious accidents are prone to be ignored.

In the course of their research, the inventors have discovered that by using image recognition and/or neural network technology, the images captured by the camera can be analyzed to automatically determine a status of the circuit breaker, including temperature and position. In order to at least partially address the above and other potential problems, embodiments of the present disclosure provide an apparatus and a method for determining a status of a circuit breaker in a switchgear.

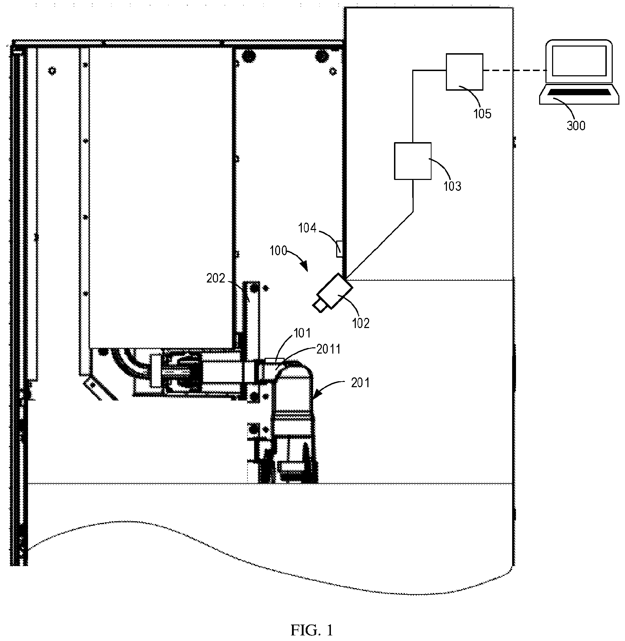

The apparatus can be used in any suitable switchgear to determine a status of a circuit breaker 201, including a temperature and a position of the circuit breaker. FIG. 1 shows a schematic diagram of an example of a switchgear to employ the apparatus and method according to embodiments of the present application. As shown, the apparatus 100 generally comprises a temperature indicator 101, an image capturing device 102 and a processor 103.

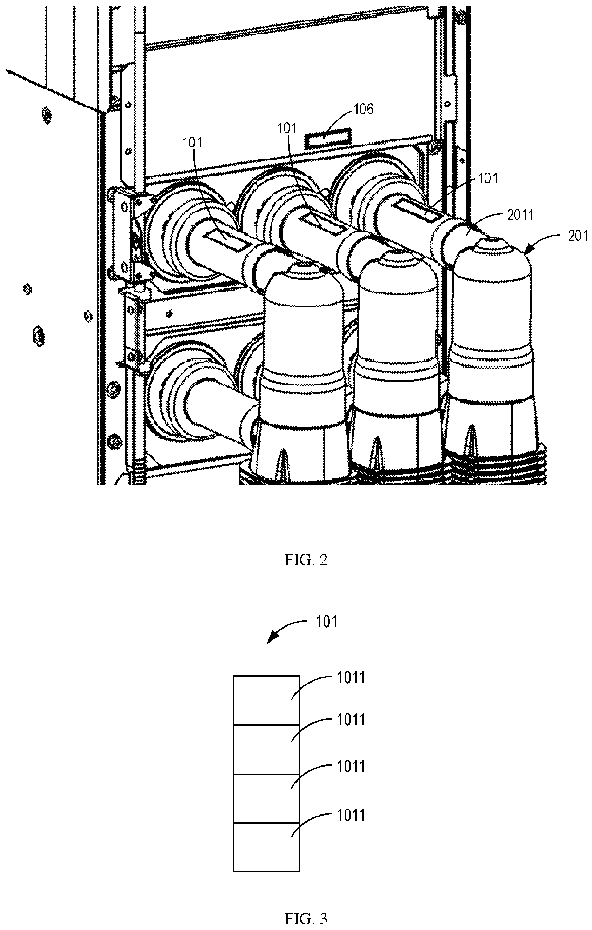

The temperature indicator 101 is arranged on suitable positions of the circuit breaker 201 such as hotspots that need to be monitored. According to the invention, the temperature indicator 101 is arranged on the moveable contacts 2011 of the circuit breaker 201, as shown in FIG. 2. Specifically, the temperature indicator 101 may be arranged on the locations of the upper and/or lower moveable contact for each phase, where the temperature tends to rise and the images are easily captured.

The temperature indicator 101 can change its appearance property when the temperature of the location where it is attached changes. The appearance property comprises at least one of color or transparency. That is, the temperature indicator 101 can change its color and/or transparency in response to a change of the temperature of the circuit breaker 201. The image capturing device 102 can capture images of the temperature indicator 101. Then the processor 103 can analyze the images to determine the temperature of the circuit breaker 201, which will be discussed further below.

In some embodiments, the temperature indicator 101 may comprise one or more thermochromic blocks 1011 arranged in an array, as shown in FIG. 3. The one or more thermochromic blocks 1011 can change their appearance property at different temperatures, respectively. Considering the temperature indicator 101 as shown in FIG. 3 as an example, there are four thermochromic blocks 1011 in a row, which can change their color and/or transparency at different temperatures or different temperature ranges, respectively.

For example, the first of the four thermochromic blocks 1011 as shown in FIG. 3 can change its color from black to dark green gradually around the threshold temperature of ~50°C. The image capturing device 102 can capture images including the temperature indicator 101. Then the processor 103 can detect the change of the appearance property of the temperature indicator 101 across the images to determine the temperature of the circuit breaker 201.

Furthermore, it is also assumed that the second, third or fourth of the four thermochromic blocks 1011 as shown in FIG. 3 can change their color when their temperature is around 60°C, 70°C, 80°C, respectively. In this way, the temperature indicator 101 as shown in FIG. 3 can indicate a temperature range from 50°C to 80°C. A wider temperature range can be achieved by employing more thermochromic blocks 1011 which change their color at different temperatures, respectively.

For example, in some embodiments, a plurality of rows of the thermochromic blocks 1011 indicate different temperature ranges, respectively. Of course, the above embodiments of using more thermochromic blocks 1011 to achieve a more extensive temperature range are merely for illustrative purposes without limiting the scope of the present application. Other approaches or arrangements are also possible. For example, in some alternative embodiments, the adjacent thermochromic blocks 1011 can change their color at more significant temperature differences.

For example, in some embodiments, the second, third or fourth thermochromic blocks 1011 as shown in FIG. 3 may change their color when their temperature is around 70°C, 90°C, 110°C, respectively. In this way, with the four thermochromic blocks 1011 as shown in FIG. 3, a temperature range of 50°C to 110°C can be indicated. This arrangement is particularly suitable when the space for attaching the temperature indicator 101 is small and the temperature range to be monitored is not significant.

To further improve the detection accuracy, in some embodiments, a reference color bar which does not change color with the temperature may be positioned adjacent to the temperature indicator 101. In this event, the image capturing device 102 can capture images indicating the color contrast between the reference color bar and the temperature indicator 101. Then the processor 103 can detect the change of the color contrast across the images to determine the temperature of the circuit breaker 201 indicated by the temperature indicator 101, thereby to eliminate the influence of light conditions and improve the detection accuracy.

In some embodiments, the thermochromic block 1011 comprises at least one thermochromic layer. The thermochromic layer comprises the liquid crystal material that can change color and/or transparency when its temperature is within the threshold temperature range, i.e., around the clear point temperature. That is, the liquid crystal materials, which change their color and/or transparency when the temperature rises to above a threshold temperature range and turn back when the temperature drops, may be chosen to indicate the temperature of the circuit breaker 201.

In some embodiments where the thermochromic layer becomes transparent when the temperature rises to above a threshold temperature range, a substrate layer with a dark color may be arranged below the thermochromic layer. With the change of transparency of the thermochromic layer from non-transparent to transparent, the color of the substrate layer displayed through the thermochromic layer also changes accordingly, which can be detected by the processor 103 to determine the temperature of the circuit breaker 201.

In some embodiments, in order to clearly show transparency change of the liquid crystal material when the temperature of the circuit breaker 201 exceeds the threshold temperature, in some embodiments, the liquid crystal material may be colored or non-transparent under the threshold temperature. In this way, the liquid crystal material can be changed from a colored or opaque state to a colorless transparent state, thereby facilitating being captured by the image capturing device 102.

Any suitable material that is colorful or non-transparent under the threshold temperature may be the material for the thermochromic block 1011, as long as they can change color and/or transparency while the temperature of the circuit breaker 201 is in a threshold temperature range to be indicated.

Among these liquid crystal materials, some liquid crystal materials, such as a chiral nematic liquid crystal (NLC) or a cholesteric phase liquid crystal or a smectic liquid crystal, they are colorful and can change color in response to the change of temperature. More importantly, these materials can become colorless transparent when their temperatures exceed the threshold temperature, i.e., the clear point temperature. Moreover, the above mentioned color change is reversible.

The image capturing device 102 can capture the images of the circuit breaker 201. The images of the circuit breaker 201 can be presented in the form of pictures or videos. For example, the images may be frames in the video. That is, in some embodiments, the processor 103 can analyze each frame of the video to determine the status of the circuit breaker 201.

In some alternative embodiments, the images also can be pictures captured at regular intervals, for example, every 0.2s or other time intervals. Furthermore, the images of the circuit breaker 201 mean that the images including the presentation of the circuit breaker 201. In some embodiments, in the images of the circuit breaker 201, there may also be the representation of a shutter 202. The shutter 202 can cover fixed contacts of the circuit breaker 201 when the moveable contacts 2011 of the circuit breaker are disengaged with the fixed contacts. The shutter 202 also can expose the fixed contacts when the moveable contacts 2011 are to be engaged with the fixed contacts.

The image capturing device 102 can be located at any suitable position in the switchgear. For example, the image capturing device 102 can be positioned at the location as shown in FIG. 1 to capture the images of upper moveable contacts of the circuit breaker 201 and the shutter 202. Alternatively or additionally, there may also be another image capturing device located at other positions than the position as shown in FIG. 1. For example, another image capturing device may be provided to capture the images of the lower moveable contacts and/or the shutter.

In some embodiments, the image capturing device 102 can capture images under a predetermined lighting condition. To enable the predetermined lighting condition, a light source 104 may be provided. The light source 104 may include LEDs, incandescent lamps, and the like. In some embodiments, the light source 104 may be controlled by the processor 103 to emit light of a specified color. The light source 104 may be integrated into the image capturing device 102. In some alternative embodiments, the light source 104 may also be provided separately from the image capturing device 102.

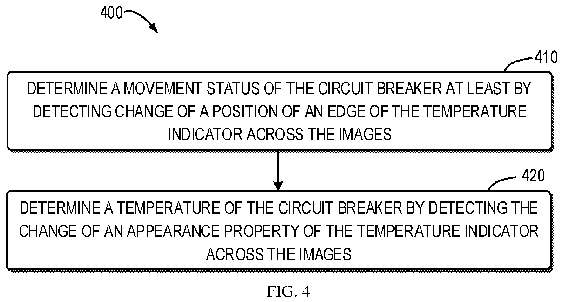

The processor 103 is coupled to the image capturing device 102 to analyze the images captured by the image capturing device 102. FIG. 4 shows a flowchart illustrating a method of determining a status of a circuit breaker in a switchgear. The method can be performed by the processor 103. In some embodiments, the processor 103 may be a processor or a control unit arranged in the switchgear, as shown in FIG. 1. In such cases, the processer 103 may be coupled to a transmission unit 105 in a wired or wireless manner. The transmission unit 105 can transmit the information about the status of the circuit breaker 201 to an external device, such as a cell phone, a laptop, a computer, or the like. The operator can perform suitable actions based on the information received by the external device.

In some alternative embodiments, the processor 103 may also be a processor of a device such as a computer located outside the switchgear. In some further alternative embodiments, the processor 103 may also be integrated into the image capturing device 103. Actually, any suitable processor that can perform the method below may be used.

As shown in FIG. 4, in block 410, the processor 103 can determine a movement status of the circuit breaker 201 at least by detecting a change of a position of an edge of the temperature indicator 101 across the images. In block 420, the processor 103 can determine a temperature of the circuit breaker 201 by detecting the change of the appearance property of the temperature indicator 101 across the images. The above steps shown in the blocks 410, 420 can be performed by the processor 103 simultaneously or sequentially.

It can be seen from the above that with the apparatus according to embodiments of the present application, the status of the circuit breaker 201 comprising the movement status and the temperature of the circuit breaker 201 can be determined based on the images captured by the image capture device 102. In this way, when the temperature of the circuit breaker exceeds a predetermined temperature, or the temperature differences between the moveable contacts exceeds a predetermined threshold, which implies the abnormal conditions, the processor 103 can detect and determine such status and provide it to the operator.

In some embodiments, the processor 103 can determine the temperature of the circuit breaker 201 in the following ways. Specifically, the processor 103 can determine a color difference of one or more thermochromic blocks 1011 based on the change of the appearance property of the temperature indicator 101. For example, as mentioned above, the first thermochromic block 1011 as shown in FIG. 3 turns dark green from black when the temperature of the circuit breaker 201 exceeds a predetermined temperature. The color change of the thermochromic block 1011 can be reflected in the images captured by the image capturing device 102.

The processor 103 can analyze each of the images by converting the color to data that can be processed by the processor 103 such as a gamut value of the color. The processor 103 can determine the differences of the gamut values of the thermochromic block 1011 in adjacent images. When the temperature of the circuit breaker exceeds the predetermined temperature, the color of the thermochromic block 1011 changes from black to dark green. As a result, the difference of the gamut values of the thermochromic block 1011 in the image captured at this time will exceed a threshold value. In accordance with the determination that the color difference exceeds the threshold value, the processor 103 can determine that the temperature of the circuit breaker 201 exceeds the predetermined temperature. In addition, if needed, the processor 103 may also cause information or an alarm about the temperature of the circuit breaker 201 to be transmitted to the external device.

In this way, the temperature of the circuit breaker 201 exceeding a predetermined temperature or the temperature differences between the contacts of the circuit breaker 201 exceeding a predetermined value can be determined and transmitted to the external device. The operator can perform suitable actions to deal with the above abnormal conditions timely and efficiently.

In the meantime, when the moveable contacts 2011 of the circuit breaker 201 are jammed during the racking-in process of the circuit breaker 201, the processor 103 can also determine the movement status of the circuit breaker 201 at least by detecting the change of the position of the edge of the temperature indicator 101. With the apparatus or the method according to embodiments of the present application, the status of the circuit breaker 201 can be determined timely and efficiently. The operator can deal with the abnormal conditions after receiving the information about the status of the circuit breaker 201 without having to keep watching the video.

In some embodiments, the processor 103 may determine the movement status of the circuit breaker 201 by detecting a change of a position of the temperature indicator. Using the temperature indicator as the detected target can effectively reduce the noise data, thereby improving detection efficiency and accuracy. In addition, detecting temperature indicator makes the device or method applicable to various types of circuit breakers, and is no longer tied to detecting shapes of specific circuit breakers.

It is to be understood that the above embodiments where the temperature indicator as the detected target are merely for illustrative purposes, without suggesting any limitations to the scope of the present application. In some alternative embodiments, the processor 103 may also determine the movement status by detecting a change of a position of other indicators than the temperature indicator 101 arranged on the circuit breaker 201 and/or the shutter 202. For example, in some embodiments, there may be a position indicator 106 arranged on the shutter to facilitate the detecting of the processor 103. The position indicator 106 may just be a label with a color different from that of the circuit breaker 201 and/or the shutter 202. By providing the temperature indicator and/or position indicator, the applicability and response speed of the apparatus and method according to embodiments of the present application are improved.

Furthermore, in some alternative embodiments, the processor 103 may also detect a change of a position of a shape or an edge of the circuit breaker 201 and/or shutter 202. In the following, the detection of the edge of the temperature change indicator 101 is taken as an example to describe how to determine the movement status.

In some embodiments, the determination of the movement status can be achieved by a suitable edge detection operator, such as a Sobel operator. With the edge detection operator, the position or the change of the position of the edge of the temperature indicator 101 and/or the position indicator 106 may be detected across the images. After the position or the change of the position of the edge is detected, a value can be obtained by applying suitable algorithms to the data associated with the position or the change of the position. Then the value may be compared with a threshold value corresponding to a predetermined position or a predetermined movement status.

In response to the value is less than or equal to the threshold value, it is determined that the circuit breaker 201 and/or the shutter 202 is in the predetermined movement status. Otherwise, if the value is larger than the threshold value, it is determined that the circuit breaker 201 and/or the shutter 202 fails to match the predetermined movement status. As a result, an alarm can be transmitted to the external device to alarm the operator of the abnormal conditions.

It is to be understood that the movement status not only means the position where the circuit breaker 201 and/or the shutter 202 is located, but also implies a status of whether the circuit breaker 201 and/or the shutter 202 is moving. That is, the movement status can involve where the circuit breaker 201 and/or the shutter 202 is located and whether the circuit breaker 201 and/or the shutter 202 is moving.

For example, it is assumed that the current predetermined movement status of the shutter 202 is moving from an open position to a closed position, if the determined movement status of the shutter 202 fails to match the predetermined movement status, an alarm can be transmitted to the operator. Furthermore, the current predetermined movement status of the shutter 202 may also refer to the shutter being held in the open position.

The process of determining the movement status using the edge detection operator will also be described below using a Sobel operator as an example. It is to be understood that this is merely for illustrative purposes without suggesting any limitation as to the scope of the present disclosure. Any other suitable operator is also possible. For example, in some alternative embodiments, Roberts Cross operator, Prewitt operator, Canny operator, Krisch operator, Marr-Hildreth Operator, or the like may also be employed.

As well known, the Sobel operator, sometimes called the Sobel-Feldman operator or Sobel filter, is used in image processing and computer vision, particularly within edge detection algorithms where it creates an image emphasizing edges. Technically, the Sobel operator is a discrete differentiation operator, computing an approximation of the gradient of the image intensity function. At each point in the image, the result of the Sobel operator is either the corresponding gradient vector or the norm of this vector. The Sobel operator is based on convolving the image with a small, separable, and integer-valued filter in the horizontal and vertical directions and is therefore relatively inexpensive in terms of computations.

In some embodiments, using the Sobel operator would incorrectly detect some edges that are not the edge of the temperature indicator 101 and/or position indicator 106. That is, the processor 103 may detect one or more edges in each of the images. The one or more edges detected by the processor 103 comprise noise edges that are not the edge of the temperature indicator 101 and/or position indicator 106.

The noise edges are typically the edges of a shape or a structure in the switchgear that does not move with the circuit breaker 201 and/or the shutter 202. In order to remove the above mentioned noise edges, the processor 103 can determine the distance of each edge and compare the determined distance with a distance threshold corresponding to the movement path of the temperature indicator 101 and/or position indicator 106. In this way, the edge of the temperature indicator 101 and/or the position indicator 106 can be detected from the one or more edges based on the movement paths of the one or more edges.

Due to factors such as the quality and resolution of each image, there is noise in data when using the Sobel operator for edge recognition. To achieve a more accurate determination of the movement status, in some embodiments, before removing the noisy edges as mentioned above, the processor 103 may also filter the noisy data and integrate discrete edges.

Specifically, the noisy data in the image can be filtered by any suitable algorithm, such as Spatial Lowpass, Spatial Highpass, Fourier Representation, Fourier Lowpass, Fourier Highpass, or the like. After the noisy date is filtered in suitable ways, each of the one or more edges, including noisy edges, are presented in a plurality of discrete edges. For example, some discrete edges belong to the edge of the temperature indicator 101 and/or the position indicator 106, and other discrete edges belong to the noisy edges. To integrate the discrete edges into one edge to which they belong, some suitable algorithms can be applied to these discrete edges, which can distinguish the edge to which they belong.

For example, in some embodiments, vector projection can be applied on these discrete edges to obtain a value, respectively. These values are then compared with a predetermined threshold. If these values are less than the predetermined threshold, it means that the corresponding discrete edges belong to the same edge. Then an integration algorithm needs to be applied to integrate the discrete edges into the edge to which they belong. In this way, the discrete edges can be integrated in an efficient way.

As described above, the processor 103 can use the edge detection operator to determine the movement status in an efficient manner. In some alternative embodiments, the movement status may also be determined by using a deep learning algorithm. These two methods can complement and verify each other to improve accuracy.

Specifically, the method performed by the processor 103 further comprises determining a feature representation for each of the images of the circuit breaker 201 by feeding the images to a neural network model. In some embodiments, the feature representation may refer to a feature tensor at least indicating information about an edge of the circuit breaker 201 and/or a shutter 202. The edge may refer to an edge of the temperature indicator 102 and/or position indicator 105. In some alternative embodiments, the edge may also refer to other edges of the circuit breaker 201 and/or a shutter 202.

To determine a movement status of circuit breaker 201 and/or the shutter 202, a similarity needs to be obtained between the feature representation and a reference representation. The reference representation is associated with a predetermined movement status of the circuit breaker 201 and/or the shutter 202. For example, in some embodiments, the reference representation may be associated with a status where the moveable contacts of the circuit breaker 201 are well engaged with the fixed contacts.

In such cases, in response to the similarity being smaller than a threshold value, the processor 103 can determine that the moveable contacts of the circuit breaker 201 is well engaged with the fixed contacts. Otherwise, if the similarity is larger than the threshold value, the processor 103 can determine that the circuit breaker 201 is in an abnormal condition where the moveable contacts 2011 are not engaged with the fixed contacts and provide information about the abnormal condition to the operator via the transmission unit. The operator may perform suitable actions to timely deal with the abnormal condition. That is, the processor 103 can cause an alarm about the movement status of the circuit breaker 201 and/or the shutter 202 to be transmitted to the external device in accordance with a determination that the movement status fails to match a predetermined status.

In some embodiments, to improve computational speed, a target region in each of the images can be determined. By applying the target region to the neural network model, the feature representation can be determined. For example, in some embodiments, the target region is a region of the image that is associated with the movement contacts. In this way, the interest target region, rather than the whole image, is applied to the neural network model, which can significantly improve the computing speed.

In some embodiments, the neural network model may be obtained by training the neural network model based on sample images and sample feature representations. The sample feature representation at least indicates information about an edge in one of the sample images.

It can be seen from the above that by using the deep learning algorithm, the movement status can be determined more intelligently. In addition, using both the deep learning algorithm and the edge detection algorithms can further improve accuracy.

It is to be understood that the order of the above steps does not mean that the method must be performed in that order, and the order in which these steps are performed can be adjusted or performed simultaneously.

## Claims

1. An apparatus for determining a status of a circuit breaker in a switchgear, comprising:
a temperature indicator (101) arranged on a moveable contact of the circuit breaker (201) and configured to change an appearance property in response to a change of a temperature of the circuit breaker (201); said appearance property comprising at least
one of color or transparency;
an image capturing device (102) configured to capture images of the circuit breaker (201); and
a processor (103) coupled to the image capturing device (102) and configured to:
determine a movement status of the circuit breaker (201) at least by detecting a change of a position of an edge of the temperature indicator (101) across the images captured by the image capturing device (102); and
determine a temperature of the circuit breaker (201) by detecting the change of the appearance property of the temperature indicator (101) across the captured images.

2. The apparatus of claim 1, further comprising:
a transmission unit (105) configured to transmit information about the movement status and the temperature of the circuit breaker (201) to an external device (300).

3. The apparatus of claim 1, further comprising:
a light source (104) configured to provide a predetermined lighting condition,
wherein the image capturing device (102) is configured to capture the images under the predetermined lighting condition.

4. The apparatus of claim 1, further comprising:
a reference color bar arranged adjacent to the temperature indicator (101),
wherein the processor (103) is further configured to determine the temperature of the circuit breaker (201) by detecting a change of color contrast between the reference color bar and the temperature indicator (101) across the images.

5. The apparatus of claim 1, wherein the temperature indicator (101) comprises one or more thermochromic blocks (1011) arranged in an array, each thermochromic block (1011) comprises at least one thermochromic layer of a liquid crystal material
wherein the liquid crystal material preferably comprises a chiral nematic liquid crystal (NLC), a cholesteric phase liquid crystal, a smectic liquid crystal, or any combination thereof; and/or
wherein the processor (103) is preferably further configured to:
determine a color difference of the one or more thermochromic blocks (1011) based on the change of the appearance property of the temperature indicator (101); and
in accordance with a determination that the color difference exceeds a threshold value, cause information about the temperature of the circuit breaker (201) to be transmitted to the external device.

6. The apparatus of claim 1, wherein the processor (103) is further configured to:
detect a change of a position of an edge of a position indicator on a shutter (202) across the images, the shutter (202) configured to cover or expose fixed contacts of the circuit breaker (201), the position indicator arranged on the shutter (202); and
determine a movement status of the shutter at least based on the detected change of the position of the edge of the position indicator,
wherein the processor (103) is preferably further configured to:
detect one or more edges in each of the images;
detect the edge of the temperature indicator (101) and/or the position indicator from the one or more edges based on movement paths of the one or more edges across the images.

7. The apparatus of claim 1, wherein the processor (103) is further configured to:
determine a feature representation for each of the images of the circuit breaker by applying the images to a neural network model, the feature representation at least indicating information about an edge of the circuit breaker (201) and/or a shutter (202), the shutter (202) configured to cover or expose fixed contacts of the circuit breaker (201); and
determine a movement status of the circuit breaker (201) and/or the shutter (202) based on a similarity between the feature representation and a reference representation, the reference representation being associated with a predetermined movement status of the circuit breaker (201) and/or the shutter (202),
wherein the processor (103) is preferably further configured to determine the feature representation by:
determine a target region of each of the images; and
determine the feature representation by applying the target region to the neural network model;
and/or,
wherein the processor (103) is preferably further configured to:
obtain the neural network model, the neural network model being trained based on sample images and sample feature representations, a sample feature representation at least indicating information about an edge in one of the sample images.

8. The apparatus of claim 6 or 7, wherein the processor (103) is further configured to:
in accordance with a determination that the movement status fails to match a predetermined status, cause an alarm about the movement status of the circuit breaker (201) and/or the shutter (202) to be transmitted to an external device.

9. A method of determining a status of a circuit breaker in a switchgear, carried out by a processor, comprising:
determining a movement status of the circuit breaker (201) at least by detecting change of a position of an edge of a temperature indicator (101) across images captured by an image capturing device (102), the image capturing device (102) coupled to the processor; the temperature indicator (101) arranged on a moveable contact of the circuit breaker (201); and
determining a temperature of the circuit breaker (201) by detecting a change of an appearance property of the temperature indicator (101) across the images captured by the image capturing device (102), the temperature indicator (101) configured to change the appearance property, in response to a change of the temperature of the circuit breaker; said appearance property comprising at least one of color or transparency.

10. The method of claim 9, further comprising:
detecting a change of color contrast between a reference color bar and the temperature indicator (101) across the images;
in accordance with a detection that the change of color contrast exceeds a threshold value, causing an alarm about the temperature of the circuit breaker (201) to be transmitted to the external device.

11. The method of claim 9, further comprising:
determining a color difference of one or more thermochromic blocks (1011) of the temperature indicator (101) based on the change of the appearance property of the temperature indicator unit (101);
in accordance with a determination that the color difference exceeds a threshold value, causing an alarm about the temperature of the circuit breaker (201) to be transmitted to the external device,
the method preferably further comprising:
detecting a change of a position of an edge of a position indicator on a shutter (202) across the images, the shutter (202) being configured to cover or expose fixed contacts of the circuit breaker (201), the position indicator being arranged on the shutter (202); and
determining a movement status of the shutter based on the detected change of the position of the edge of the position indicator,
wherein the method preferably further comprises:
detecting one or more edges in each of the images;
detecting the edge of the temperature indicator (101) and/or the position indicator from the one or more edges based on movement paths of the one or more edges across the images.

12. The method of claim 9, wherein further comprising:
determining a feature representation for each of the images of the circuit breaker by applying the images to a neural network model, the feature representation at least indicating information about an edge of the circuit breaker and/or a shutter (202), the shutter (202) configured to cover or expose fixed contacts of the circuit breaker (201); and
determining a movement status of the circuit breaker and/or the shutter (202) based on a similarity between the feature representation and a reference representation, the reference representation being associated with a predetermined movement status of the circuit breaker and/or the shutter (202).

13. The method of claim 12, further comprising:
determining a target region of each of the images, and
determining the feature representation by applying the target region to the neural network model;
and/or
the method further comprising:
obtaining the neural network model, the neural network model being trained based on sample images and sample feature representations, a sample feature representation at least indicating information about an edge in one of the sample images.

14. The method of claim 11 or 12, further comprising:
in accordance with a determination that the movement status fails to match a predetermined status, causing an alarm about the circuit breaker (201) and/or the shutter (202) to be transmitted to an external device.

## Patentansprüche

1. Einrichtung zum Bestimmen eines Status eines Leistungsschalters in einer Schaltanlage, umfassend:
einen Temperaturindikator (101), der an einem beweglichen Kontakt des Leistungsschalters (201) angeordnet und dazu ausgelegt ist, eine Erscheinungseigenschaft als Reaktion auf eine Änderung einer Temperatur des Leistungsschalters (201) zu ändern; wobei die Erscheinungseigenschaft mindestens eines umfasst von Farbe oder Transparenz;
eine Bilderfassungsvorrichtung (102), die dazu ausgelegt ist, Bilder des Leistungsschalters (201) zu erfassen; und
einen Prozessor (103), der mit der Bilderfassungsvorrichtung (102) gekoppelt und zu Folgendem ausgelegt ist:
Bestimmen eines Bewegungsstatus des Leistungsschalters (201) zumindest durch Detektieren einer Änderung einer Position einer Kante des Temperaturindikators (101) über die Bilder hinweg, die durch die Bilderfassungsvorrichtung (102) erfasst werden; und
Bestimmen einer Temperatur des Leistungsschalters (201) durch Detektieren der Änderung der Erscheinungseigenschaft des Temperaturindikators (101) über die erfassten Bilder hinweg.

2. Einrichtung nach Anspruch 1, ferner umfassend:
eine Übertragungseinheit (105), die dazu ausgelegt ist, Informationen über den Bewegungsstatus und die Temperatur des Leistungsschalters (201) an eine externe Vorrichtung (300) zu übertragen.

3. Einrichtung nach Anspruch 1, ferner umfassend:
eine Lichtquelle (104), die dazu ausgelegt ist, eine vorbestimmte Beleuchtungsbedingung bereitzustellen,
wobei die Bilderfassungsvorrichtung (102) dazu ausgelegt ist, die Bilder unter der vorbestimmten Beleuchtungsbedingung zu erfassen.

4. Einrichtung nach Anspruch 1, ferner umfassend:
einen Referenzfarbbalken, der angrenzend an den Temperaturindikator (101) angeordnet ist,
wobei der Prozessor (103) ferner dazu ausgelegt ist, die Temperatur des Leistungsschalters (201) durch Detektieren einer Änderung des Farbkontrasts zwischen dem Referenzfarbbalken und dem Temperaturindikator (101) über die Bilder hinweg zu bestimmen.

5. Einrichtung nach Anspruch 1, wobei der Temperaturindikator (101) einen oder mehrere thermochrome Blöcke (1011) umfasst, die in einem Array angeordnet sind, wobei jeder thermochrome Block (1011) mindestens eine thermochrome Schicht aus einem Flüssigkristallmaterial umfasst,
wobei das Flüssigkristallmaterial vorzugsweise einen chiralen nematischen Flüssigkristall (NLC), einen cholesterischen Flüssigkristall, einen smektischen Flüssigkristall oder eine beliebige Kombination davon umfasst; und/oder
wobei der Prozessor (103) vorzugsweise ferner zu Folgendem ausgelegt ist:
Bestimmen einer Farbdifferenz des einen oder der mehreren thermochromen Blöcke (1011) basierend auf der Änderung der Erscheinungseigenschaft des Temperaturindikators (101); und
gemäß einer Bestimmung, dass die Farbdifferenz einen Schwellenwert überschreitet, bewirken, dass Informationen über die Temperatur des Leistungsschalters (201) an die externe Vorrichtung übertragen werden.

6. Einrichtung nach Anspruch 1, wobei der Prozessor (103) ferner ausgelegt ist zum:
Detektieren einer Änderung einer Position einer Kante eines Positionsindikators auf einem Verschluss (202) über die Bilder hinweg, wobei der Verschluss (202) dazu ausgelegt ist, feste Kontakte des Leistungsschalters (201) abzudecken oder freizulegen, wobei der Positionsindikator auf dem Verschluss (202) angeordnet ist; und
Bestimmen eines Bewegungsstatus des Verschlusses zumindest basierend auf der detektierten Änderung der Position der Kante des Positionsindikators,
wobei der Prozessor (103) vorzugsweise ferner zu Folgendem ausgelegt ist:
Detektieren einer oder mehrerer Kanten in jedem der Bilder;
Detektieren der Kante des Temperaturindikators (101) und/oder des Positionsindikators von der einen oder den mehreren Kanten basierend auf Bewegungsbahnen der einen oder der mehreren Kanten über die Bilder hinweg.

7. Einrichtung nach Anspruch 1, wobei der Prozessor (103) ferner ausgelegt ist zum:
Bestimmen einer Merkmalsdarstellung für jedes der Bilder des Leistungsschalters durch Anwenden der Bilder auf ein neuronales Netzwerkmodell, wobei die Merkmalsdarstellung zumindest Informationen über eine Kante des Leistungsschalters (201) und/oder einen Verschluss (202) angibt, wobei der Verschluss (202) dazu ausgelegt ist, feste Kontakte des Leistungsschalters (201) abzudecken oder freizulegen; und
Bestimmen eines Bewegungsstatus des Leistungsschalters (201) und/oder des Verschlusses (202) basierend auf einer Ähnlichkeit zwischen der Merkmalsdarstellung und einer Referenzdarstellung, wobei die Referenzdarstellung mit einem vorbestimmten Bewegungsstatus des Leistungsschalters (201) und/oder des Verschlusses (202) assoziiert ist,
wobei der Prozessor (103) vorzugsweise ferner dazu ausgelegt ist, die Merkmalsdarstellung durch Folgendes zu bestimmen:
Bestimmen einer Zielregion jedes der Bilder; und
Bestimmen der Merkmalsdarstellung durch Anwenden der Zielregion auf das neuronale Netzwerkmodell;
und/oder
wobei der Prozessor (103) vorzugsweise ferner zu Folgendem ausgelegt ist:
Erhalten des neuronalen Netzwerkmodells, wobei das neuronale Netzwerkmodell basierend auf Sample-Bildern und Sample-Merkmalsdarstellungen trainiert wird, wobei eine Sample-Merkmalsdarstellung zumindest Informationen über eine Kante in einem der Sample-Bilder angibt.

8. Einrichtung nach Anspruch 6 oder 7, wobei der Prozessor (103) ferner ausgelegt ist zum:
gemäß einer Bestimmung, dass der Bewegungszustand nicht mit einem vorbestimmten Zustand übereinstimmt, Bewirken, dass ein Alarm über den Bewegungszustand des Leistungsschalters (201) und/oder des Verschlusses (202) an eine externe Einrichtung übertragen wird.

9. Verfahren zum Bestimmen eines Status eines Leistungsschalters in einer Schaltanlage, das durch einen Prozessor ausgeführt wird, umfassend:
Bestimmen eines Bewegungsstatus des Leistungsschalters (201) zumindest durch Detektieren einer Änderung einer Position einer Kante eines Temperaturindikators (101) über Bilder hinweg, die durch eine Bilderfassungsvorrichtung (102) erfasst werden, wobei die Bilderfassungsvorrichtung (102) mit dem Prozessor gekoppelt ist; wobei der Temperaturindikator (101) auf einem beweglichen Kontakt des Leistungsschalters (201) angeordnet ist; und
Bestimmen einer Temperatur des Leistungsschalters (201) durch Detektieren einer Änderung einer Erscheinungseigenschaft des Temperaturindikators (101) über die Bilder hinweg, die durch die Bilderfassungsvorrichtung (102) erfasst werden, wobei der Temperaturindikator (101) dazu ausgelegt ist, die Erscheinungseigenschaft als Reaktion auf eine Änderung der Temperatur des Leistungsschalters zu ändern; wobei die Erscheinungseigenschaft mindestens eines von Farbe oder Transparenz umfasst.

10. Verfahren nach Anspruch 9, ferner umfassend:
Detektieren einer Änderung des Farbkontrasts zwischen einem Referenzfarbbalken und dem Temperaturindikator (101) über die Bilder hinweg;
gemäß einer Detektion, dass die Änderung des Farbkontrasts einen Schwellenwert überschreitet, Bewirken, dass ein Alarm über die Temperatur des Leistungsschalters (201) an die externe Vorrichtung übertragen wird.

11. Verfahren nach Anspruch 9, ferner umfassend:
Bestimmen einer Farbdifferenz eines oder mehrerer thermochromer Blöcke (1011) des Temperaturindikators (101) basierend auf der Änderung der Erscheinungseigenschaft der Temperaturindikatoreinheit (101);
gemäß einer Bestimmung, dass die Farbdifferenz einen Schwellenwert überschreitet, Bewirken, dass ein Alarm über die Temperatur des Leistungsschalters (201) an die externe Vorrichtung übertragen wird,
wobei das Verfahren vorzugsweise ferner Folgendes umfasst:
Detektieren einer Änderung einer Position einer Kante eines Positionsindikators auf einem Verschluss (202) über die Bilder hinweg, wobei der Verschluss (202) dazu ausgelegt ist, feste Kontakte des Leistungsschalters (201) abzudecken oder freizulegen, wobei der Positionsindikator auf dem Verschluss (202) angeordnet ist; und
Bestimmen eines Bewegungsstatus des Verschlusses basierend auf der detektierten Änderung der Position der Kante des Positionsindikators,
wobei das Verfahren vorzugsweise ferner Folgendes umfasst:
Detektieren einer oder mehrerer Kanten in jedem der Bilder;
Detektieren der Kante des Temperaturindikators (101) und/oder des Positionsindikators von der einen oder den mehreren Kanten basierend auf Bewegungsbahnen der einen oder der mehreren Kanten über die Bilder hinweg.

12. Verfahren nach Anspruch 9, wobei es ferner Folgendes umfasst:
Bestimmen einer Merkmalsdarstellung für jedes der Bilder des Leistungsschalters durch Anwenden der Bilder auf ein neuronales Netzwerkmodell, wobei die Merkmalsdarstellung zumindest Informationen über eine Kante des Leistungsschalters und/oder einen Verschluss (202) angibt, wobei der Verschluss (202) dazu ausgelegt ist, feste Kontakte des Leistungsschalters (201) abzudecken oder freizulegen; und
Bestimmen eines Bewegungsstatus des Leistungsschalters und/oder des Verschlusses (202) basierend auf einer Ähnlichkeit zwischen der Merkmalsdarstellung und einer Referenzdarstellung, wobei die Referenzdarstellung mit einem vorbestimmten Bewegungsstatus des Leistungsschalters und/oder des Verschlusses (202) assoziiert ist.

13. Verfahren nach Anspruch 12, ferner umfassend:
Bestimmen einer Zielregion jedes der Bilder, und
Bestimmen der Merkmalsdarstellung durch Anwenden der Zielregion auf das neuronale Netzwerkmodell;
und/oder
wobei das Verfahren ferner Folgendes umfasst:
Erhalten des neuronalen Netzwerkmodells, wobei das neuronale Netzwerkmodell basierend auf Sample-Bildern und Sample-Merkmalsdarstellungen trainiert wird, wobei eine Sample-Merkmalsdarstellung zumindest Informationen über eine Kante in einem der Sample-Bilder angibt.

14. Verfahren nach Anspruch 11 oder 12, ferner umfassend:
gemäß einer Bestimmung, dass der Bewegungszustand nicht mit einem vorbestimmten Zustand übereinstimmt, Bewirken, dass ein Alarm über den Leistungsschalter (201) und/oder den Verschluss (202) an eine externe Einrichtung übertragen wird.

## Revendications

1. Appareil pour déterminer un état d'un disjoncteur dans un appareillage de commutation, comprenant :
un indicateur de température (101) agencé sur un contact mobile du disjoncteur (201) et configuré pour changer une propriété d'aspect en réponse à un changement d'une température du disjoncteur (201) ; ladite propriété d'aspect comprenant au moins
une parmi une couleur ou une transparence ;
un dispositif de capture d'images (102) configuré pour capturer des images du disjoncteur (201) ; et
un processeur (103) couplé au dispositif de capture d'images (102) et configuré pour :
déterminer un état de mouvement du disjoncteur (201) au moins en détectant un changement de position d'un bord de l'indicateur de température (101) sur les images capturées par le dispositif de capture d'images (102) ; et
déterminer une température du disjoncteur (201) en détectant le changement de la propriété d'aspect de l'indicateur de température (101) sur les images capturées.

2. Appareil selon la revendication 1, comprenant en outre :
une unité de transmission (105) configurée pour transmettre des informations sur l'état de mouvement et la température du disjoncteur (201) à un dispositif externe (300).

3. Appareil selon la revendication 1, comprenant en outre :
une source de lumière (104) configurée pour fournir une condition d'éclairage prédéterminée,
dans lequel le dispositif de capture d'images (102) est configuré pour capturer les images dans les conditions d'éclairage prédéterminées.

4. Appareil selon la revendication 1, comprenant en outre :
une barre de couleur de référence agencée de façon adjacente à l'indicateur de température (101),
dans lequel le processeur (103) est en outre configuré pour déterminer la température du disjoncteur (201) en détectant un changement de contraste de couleur entre la barre de couleur de référence et l'indicateur de température (101) sur les images.

5. Appareil selon la revendication 1, dans lequel l'indicateur de température (101) comprend un ou plusieurs blocs thermochromiques (1011) agencés dans une matrice, chaque bloc thermochromique (1011) comprend au moins une couche thermochromique d'un matériau à cristaux liquides
dans lequel le matériau à cristaux liquides comprend de préférence un cristal liquide nématique (NLC) chiral, un cristal liquide en phase cholestérique, un cristal liquide smectique, ou toute combinaison de ceux-ci ; et/ou
dans lequel le processeur (103) est de préférence en outre configuré pour :
déterminer une différence de couleur des un ou plusieurs blocs thermochromiques (1011) sur la base du changement de la propriété d'aspect de l'indicateur de température (101) ; et
en fonction d'une détermination que la différence de couleur dépasse une valeur seuil, entraîner la transmission d'informations relatives à la température du disjoncteur (201) au dispositif externe.

6. Appareil selon la revendication 1, dans lequel le processeur (103) est configuré en outre pour :
détecter un changement de position d'un bord d'un indicateur de position sur un volet (202) sur les images, le volet (202) étant configuré pour couvrir ou exposer des contacts fixes du disjoncteur (201), l'indicateur de position étant agencé sur le volet (202) ; et
déterminer un état de mouvement du volet au moins sur la base du changement détecté de la position du bord de l'indicateur de position,
dans lequel le processeur (103) est de préférence en outre configuré pour :
détecter un ou plusieurs bords dans chacune des images ;
détecter le bord de l'indicateur de température (101) et/ou de l'indicateur de position à partir des un ou plusieurs bords sur la base de trajets de mouvement des un ou plusieurs bords sur les images.

7. Appareil selon la revendication 1, dans lequel le processeur (103) est configuré en outre pour :
déterminer une représentation de caractéristique pour chacune des images du disjoncteur en appliquant les images à un modèle de réseau neuronal, la représentation de caractéristique indiquant au moins des informations concernant un bord du disjoncteur (201) et/ou un volet (202), le volet (202) étant configuré pour couvrir ou exposer des contacts fixes du disjoncteur (201) ; et
déterminer un état de mouvement du disjoncteur (201) et/ou du volet (202) sur la base d'une similitude entre la représentation de caractéristique et une représentation de référence, la représentation de référence étant associée à un état de mouvement prédéterminé du disjoncteur (201) et/ou du volet (202),
dans lequel le processeur (103) est de préférence en outre configuré pour déterminer la représentation de caractéristique par :
la détermination d'une région cible de chacune des images ; et
la détermination de la représentation de caractéristique en appliquant la région cible au modèle de réseau neuronal ;
et/ou
dans lequel le processeur (103) est de préférence en outre configuré pour :
l'obtention du modèle de réseau neuronal, le modèle de réseau neuronal étant entraîné sur la base d'images échantillons et de représentations de caractéristiques échantillons, une représentation de caractéristique échantillons indiquant au moins des informations concernant un bord dans l'une des images échantillons.

8. Appareil selon la revendication 6 ou 7, dans lequel le processeur (103) est configuré en outre pour :
en fonction d'une détermination que l'état de mouvement ne correspond pas à un état prédéterminé, entraîner la transmission d'une alarme concernant l'état de mouvement du disjoncteur (201) et/ou du volet (202) à un dispositif externe.

9. Procédé de détermination d'un état d'un disjoncteur dans un appareillage de commutation, mis en œuvre par un processeur, comprenant :
la détermination d'un état de mouvement du disjoncteur (201) au moins en détectant un changement de position d'un bord d'un indicateur de température (101) sur des images capturées par un dispositif de capture d'images (102), le dispositif de capture d'images (102) étant couplé au processeur ; l'indicateur de température (101) étant agencé sur un contact mobile du disjoncteur (201) ; et
la détermination d'une température du disjoncteur (201) en détectant un changement d'une propriété d'aspect de l'indicateur de température (101) sur les images capturées par le dispositif de capture d'images (102), l'indicateur de température (101) étant configuré pour changer la propriété d'aspect, en réponse à un changement de température du disjoncteur ; ladite propriété d'aspect comprenant au moins une parmi une couleur ou une transparence.

10. Procédé selon la revendication 9, comprenant en outre :
la détection d'un changement de contraste de couleur entre une barre de couleur de référence et l'indicateur de température (101) sur les images ;
en fonction d'une détection que le changement de contraste de couleur dépasse une valeur seuil, le fait d'entraîner la transmission d'une alarme concernant la température du disjoncteur (201) au dispositif externe.

11. Procédé selon la revendication 9, comprenant en outre :
la détermination d'une différence de couleur d'un ou plusieurs blocs thermochromiques (1011) de l'indicateur de température (101) sur la base du changement de la propriété d'aspect de l'unité d'indicateur de température (101) ;
en fonction d'une détermination que la différence de couleur dépasse une valeur seuil, le fait d'entraîner la transmission d'une alarme concernant la température du disjoncteur (201) au dispositif externe,
le procédé comprenant de préférence en outre :
la détection d'un changement de position d'un bord d'un indicateur de position sur un volet (202) sur les images, le volet (202) étant configuré pour couvrir ou exposer des contacts fixes du disjoncteur (201), l'indicateur de position étant agencé sur le volet (202) ; et
la détermination d'un état de mouvement du volet sur la base du changement détecté de la position du bord de l'indicateur de position,
dans lequel le procédé comprend de préférence en outre : la détection d'un ou plusieurs bords dans chacune des images ;
la détection du bord de l'indicateur de température (101) et/ou de l'indicateur de position à partir des un ou plusieurs bords sur la base de trajets de mouvement des un ou plusieurs bords sur les images.

12. Procédé selon la revendication 9, comprenant en outre :
la détermination d'une représentation de caractéristique pour chacune des images du disjoncteur en appliquant les images à un modèle de réseau neuronal, la représentation de caractéristique indiquant au moins des informations concernant un bord du disjoncteur et/ou un volet (202), le volet (202) étant configuré pour couvrir ou exposer des contacts fixes du disjoncteur (201) ; et
la détermination d'un état de mouvement du disjoncteur et/ou de l'obturateur (202) sur la base d'une similitude entre la représentation de caractéristique et une représentation de référence, la représentation de référence étant associée à un état de mouvement prédéterminé du disjoncteur et/ou de l'obturateur (202).

13. Procédé selon la revendication 12, comprenant en outre :
la détermination d'une région cible de chacune des images, et
la détermination de la représentation de caractéristique en appliquant la région cible au modèle de réseau neuronal ;
et/ou
le procédé comprenant en outre :
l'obtention du modèle de réseau neuronal, le modèle de réseau neuronal étant entraîné sur la base d'images échantillons et de représentations de caractéristiques échantillons, une représentation de caractéristique échantillons indiquant au moins des informations concernant un bord dans l'une des images échantillons.

14. Procédé selon la revendication 11 ou 12, comprenant en outre :
en fonction d'une détermination que l'état de mouvement ne correspond pas à un état prédéterminé, le fait d'entraîner la transmission d'une alarme concernant le disjoncteur (201) et/ou l'obturateur (202) à un dispositif externe.
